# EUROPÄISCHE PATENTSCHRIFT

(11) **EP 1 180 405 B1**
(45) Veröffentlichungstag und Bekanntmachung des Hinweises auf die Patenterteilung: **01.12.2004**
(21) Anmeldenummer: 01118918.0
(22) Anmeldetag: 03.08.2001
(51) Int. Cl.: B21J 15/08, B29C 65/60

(54) **Verfahren und Vorrichtung zum Verbinden von Gegenständen mittels plastisch verformbarer Verbindungskörper**
Method and apparatus for joining pieces by means of a plastically deformable joining element
Methode et dispositif d'assemblage des pièces au moyen d'un element plastiquement déformable

(30) Priorität: 04.08.2000 DE 10038158
(43) Veröffentlichungstag der Anmeldung: 20.02.2002
(73) Patentinhaber: KIEFEL GmbH, 83395 Freilassing (DE)
(72) Erfinder: Lochner, Hans, 83471 Berchtesgaden (DE); Gschwendtner, Rupert, 83435 Bad Reichenhall (DE); Hobelsberger, Marco, 83416 Saaldorf-Surheim (DE)
(74) Vertreter: Zmyj, Erwin, Dipl.-Ing., Dipl.-Wirtsch.-Ing.

(56) Entgegenhaltungen:
- EP-A- 0 965 400
- DD-A- 250 978
- DE-C- 3 932 294
- DE-U- 9 417 308

## Beschreibung

Die Erfindung bezieht sich auf ein Verfahren zum Verbinden von Gegenständen mittels mindestens eines plastisch verformbaren Verbindungskörpers, bei dem der Verbindungskörper zunächst erhitzt und anschließend mittels eines Formstempels bleibend verformt wird. Die Erfindung bezieht sich auch auf eine Vorrichtung zur Durchführung des Verfahrens.

Bei einem gattungsgemäßen Verfahren nach der EP 0 965 400 A2 wird zunächst der Verbindungskörper, der einen Vorsprung des einen der beiden zu verbindenden Teile darstellt, mittels einer Heißluftdüse erwärmt, worauf dann mittels eines kalten Stempels der Verbindungskörper verformt wird, der durch ein zweites aufzunietendes Teil hindurchgreift und dieses durch den angeformten Nietkopf mit dem ersten Teil verbindet.

Nietverfahren dieser Art erfordern einen hohen Energieeinsatz, da die aus der Düse auströmende Heißluft nicht nur den Verbindungskörper, d.h. den Niet, sondern auch das umgebende Material erwärmt, was manchmal zu optischen Beeinträchtigungen bis hin zu Schädigungen des Materials führen kann. Außerdem ist die Verbindung häufig nicht durch einen besonders hohen Presssitz gekennzeichnet, was meistens an der ungleichmäßigen Erwärmung des Vorsprunges, Verbindungskörpers oder Niets liegt.

Aufgabe der Erfindung ist es, ein Verfahren und eine Vorrichtung zum Verbinden von Gegenständen mittels plastisch verformbarer Verbindungskörper zu schaffen, mit deren Hilfe energiesparend thermische Nietverbindungen mit hoher Festigkeit und ohne Beeinträchtigung des den Verbindungskörper umgebenden Materials erzielbar sind.

Diese Aufgabe wird durch ein Verfahren mit den Merkmalen des Anspruchs 1 gelöst.

Durch die heiße Gasströmung, die den Verbindungskörper eng umströmt, wird nicht nur eine völlig gleichmäßige Erhitzung des Verbindungskörpers und damit eine besonders gute Voraussetzung für den anschließenden Verformungs- bzw. Nietvorgang erzielt, sondern es wird auch die Erwärmung des den Verbindungskörper umgebenden Materials vermieden, was insbesondere dann von besonderer Bedeutung ist, wenn es sich hierbei um temperaturempfindliche Materialien handelt. Die gleichmäßige Durchwärmung des Verbindungskörpers ist eine wesentliche Voraussetzung für ein homogenes Materialgefüge nach dem Verformen, also nach dem Nieten, so dass die hierdurch erzielte Nietverbindung sich durch eine hohe Festigkeit auszeichnet und hohen Belastungskräften standhält. Der Zeitpunkt des Beendens der Heizwirkung hängt davon ab, wie hoch der Wärmeinhalt des Gesamtsystemes ist, welches aus dem Verbindungskörper und dem Formstempel gebildet wird.

Wird beispielsweise mit einem kalten Formstempel gearbeitet und besteht dadurch die Gefahr, dass in Abhängigkeit von der Masse des Verbindungskörpers dieser zu rasch abkühlt, wenn die Heizwirkung eher abgestellt wird, so wird man zwangsläufig die Heizwirkung etwas länger aufrechterhalten müssen, als wenn die Wärmebedingungen günstiger sind, so dass man etwas eher die Heizwirkung abschalten kann, um die Taktzeiten zu verkürzen.

Unter dem Ausdruck *"Verbindungskörper*" ist entweder ein loser in eine Bohrung der zu verbindenden Teile einführbarer Niet oder ein Vorsprung an einem Teil zu verstehen, der durch eine Bohrung des anzuheftenden Teiles hindurchführbar ist.

Die für die gleichmäßige Erwärmung des Verbindungskörpers notwendige Gasströmung wird durch einen im Bereich des Verbindungskörpers vorgesehenen Heizkörper erhitzt.

Um sowohl den Formstempel als auch den gebildeten Nietkopf abzukühlen, wird in Weiterbildung der Erfindung die Gasströmung nach der Beendigung der Heizwirkung mengenmäßig erhöht. Hierdurch wird die abkühlende Wirkung beschleunigt.

Bei einer ersten Variante des Verfahrens wird der Formstempel für die Verformung beheizt und die Gasströmung wird durch den Formstempel erhitzt.

Um eine möglichst intensive Erhitzung der Gasströmung durch den Formstempel zu erreichen ist in der Erfindung vorgesehen, dass die Gasströmung am oberen Ende des Verbindungskörpers nach unten gerichtet und außen durch eine Strömungsbegrenzung begrenzt wird. Hierdurch ist es möglich, die Gasströmung sehr eng mit hoher Geschwindigkeit um den Formstempel herumzuführen und dadurch einen guten Wärmeübergang zwischen Formstempel und Gasströmung zu erzielen. Außerdem hat die Begrenzung durch eine Strömungsbegrenzung den Vorteil, dass man mit einer geringen, erwärmten Gasmenge, die sehr eng um den verformbaren Verbindungskörper herumgeführt wird, auskommt, wodurch wenig Energie zum gleichmäßigen Erwärmen und plastifizieren benötigt wird. Außerdem werden außenliegende Bereiche der zu verbindenden Teile nicht in Mitleidenschaft gezogen.

Um diese Vorteile in besonders eindrucksvoller Form zu erzielen, ist in zweckmäßiger Ausgestaltung vorgesehen, dass die Strömungsbegrenzung als Wand den Formstempel zumindest im Bereich seiner Heizung mit geringem Abstand umgibt und die Gasströmung von oben in Richtung auf das freie Ende des Formstempels in dem Spalt zwischen Formstempel und Wand eingeführt wird.

Vorzugsweise wird die Gasströmung in Richtung des freien Endes des Formstempels beschleunigt.

Die Vorrichtung, insbesondere zur Durchführung des Verfahrens wird durch Anspruch 7 definiert. Bei dieser Vorrichtung wird das gasförmige Medium durch den Formstempel erhitzt, welches zur Vergleichmäßigung der Temperatur in dem verformbaren Verbindungskörper beiträgt, worauf dieser Verbindungskörper mittels des geheizten Formstempels verformt wird.

Der Hinweis, dass die Vorrichtung insbesondere zur Durchführung des Verfahrens vorgesehen ist, bedeutet, dass diese Vorrichtung ohne konstruktive Änderung nicht nur für die Verformung von Verbindungskörpern dienen kann, sondern auch zur Verformung von Gegenständen eingesetzt werden kann, die nicht zum Verbinden von Teilen dienen, sondern nur in ihrer Gestaltung, beispielsweise am Ende eines Vorsprunges verformt werden müssen.

Gemäß der Erfindung ist der Formstempel zusammen mit der Strömungsbegrenzung höhenverschiebbar geführt.

Um einen wirkungsvollen Energieeinsatz zur Beheizung des Formstempels und des gasförmigen Mediums zu erzielen, ist in Weiterbildung der Erfindung der Formstempel im Inneren mit einer elektrischen Heizung ausgerüstet und mit geringem Abstand von einer Strömungsbegrenzung umgeben, die eine Gaszuführungsleitung aufweist und die Gasströmung zum verformbaren Verbindungskörper leitet. Der elektrisch beheizte Formstempel erhitzt das in den Zwischenraum zwischen Formstempel und Strömungsbegrenzung eingeführte Gasmedium, welches wegen des relativ engen Spaltes rasch und mit geringem Energieaufwand erhitzt wird.

Eine bevorzugte Ausgestaltung dieser Vorrichtung ist dadurch gekennzeichnet, dass die elektrische Heizung als Heizpatrone in unmittelbarer Nähe des vorderen Endes des dünnwandigen, massearmen Formstempels angeordnet ist. Die Ausbildung des Formstempels mit dünner Wand und somit mit geringer Masse, hat den Vorteil, dass die Erhitzung des Formstempels mit geringer Energie erfolgen kann und dass ein rascher Temperaturwechsel zwischen Erhitzung und Abkühlung möglich ist. Da die Heizenergie in unmittelbarer Nähe an dem Ende zur Entfaltung gebracht wird, das zur Verformung des Verbindungskörpers dient, so wird hierdurch Energie gespart und die Aufheiz- und Abkühlvorgänge erfolgen rascher.

Es kann insbesondere bei der Anwendung größerer Gasmengen vorteilhaft sein, wenn in Weiterbildung der Erfindung der Formstempel an seiner Außenseite im Heizbereich mit Wärmeübertragungsrippen versehen ist, da hierdurch, insbesondere in Verbindung mit einem engen Abstand der Strömungsbegrenzung ein sehr guter Wärmeübergang zwischen dem Formstempel und dem aufzuheizenden Gas erzielt wird.

Wenn die Strömungsbegrenzung an ihrem unteren offenen Ende düsenartig verjüngt ist, so wird das gasförmige Medium in Richtung auf den zu erhitzenden Verbindungskörper beschleunigt, was den Wärmeübergang erhöht. Diese Ausgestaltung ist insbesondere dann vorteilhaft, wenn der Formstempel mit Wärmeübertragungsrippen versehen ist. Die Verjüngung bewirkt dann einen kleineren Austrittsquerschnitt, so dass die Strömungsbegrenzung am Austrittsende einen sehr geringen Abstand zum Verbindungskörper aufweist. Hierdurch wird nicht nur eine besonders gute Erhitzung des Verbindungskörpers erzielt, sondern auch das den Verbindungskörper umgebende Material gegen Hitzeeinwirkung abgeschirmt.

Die Erfindung wird nachfolgend anhand zweier in der Zeichnung in schematischer Weise dargestellter Ausführungsbeispiele näher erläutert. In der Zeichnung zeigen:
- **Figur 1:**: Einen Schnitt durch eine erste Ausführungsvariante der Vorrichtung unmittelbar vor der Verformung eines Verbindungskörpers;
- **Figur 2:**: Einen Schnitt durch eine zweite Ausführungsvariante der Vorrichtung unmittelbar vor der Verformung eines Verbindungskörpers;
- **Figur 3:**: Die Vorrichtung nach Figur 2 bei Beginn des Verformungsvorganges;

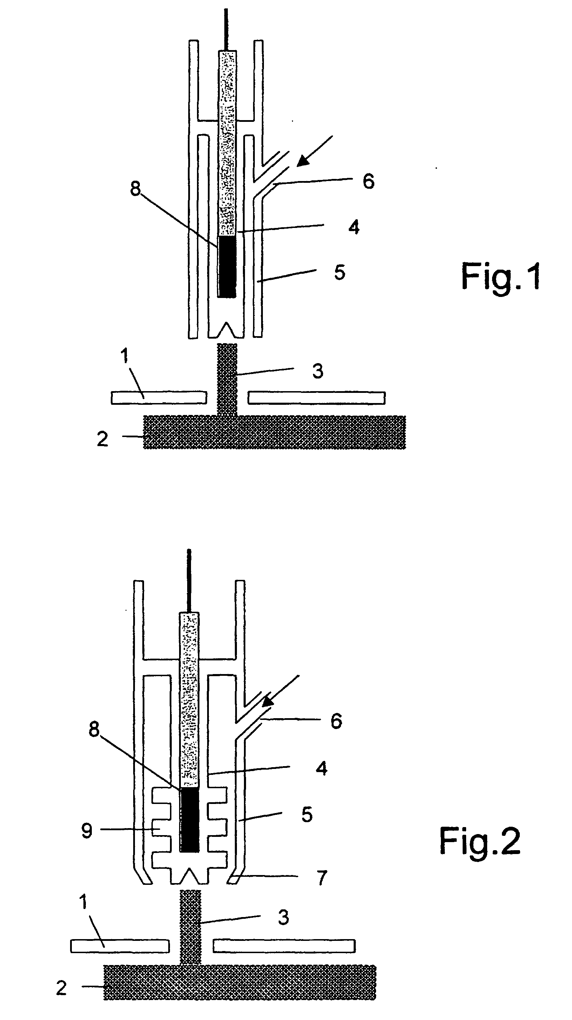

Alle Ausführungsvarianten der Vorrichtung entsprechend den Figuren 1 bis 3 dienen zur Verbindung von mindestens zwei Teilen 1 und 2, wobei das Teil 2 aus einem plastifizierbaren Kunststoff besteht und einen Vorsprung 3 aufweist, der durch die noch zu beschreibende Vorrichtung nach Art eines Niets verformt wird, um die beiden Teile 1 und 2 zusammenzufügen. Dieser Vorsprung wird nachfolgend als Verbindungskörper bezeichnet, da es nicht darauf ankommt, ob der Verbindungskörper mit dem einen der beiden zu verbindenden Teile einstückig ausgeführt ist, wie im dargestellten Ausführungsbeispiel, sondern der Verbindungskörper kann auch als ein loser Niet ausgebildet sein, der durch beide zu verbindenden Teile hindurchgeführt ist und an einer Seite einen bereits vorgefertigten Nietkopf aufweist. Der Verbindungskörper kann auch als Bolzen ausgebildet sein, wobei für die Verbindung von mindestens zwei Teilen an beiden Enden dieses Bolzens Nietköpfe in der beschriebenen Art angeformt werden. Die Form des verformbaren Körpers ist für das vorliegende Verfahren ohne Bedeutung. Dieser verformbare Körper kann im Querschnitt rund, oval, quadratisch oder rechteckig sein. Er kann aus Vollmaterial bestehen oder hohl ausgeführt sein.

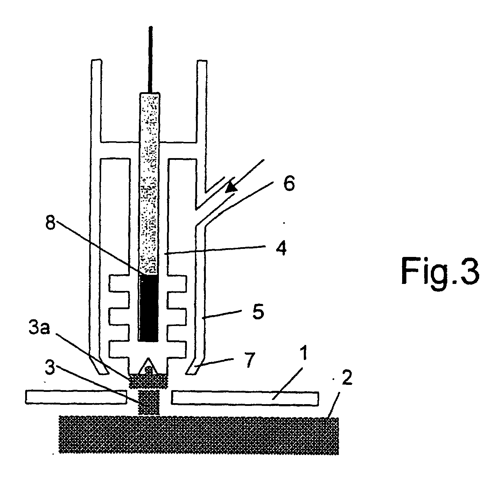

Bei den Ausführungsformen nach den Figuren 1 bis 3 ist ein Formstempel 4 mit einer Strömungsbegrenzung 5 in Höhenrichtung verschiebbar geführt, die eine Gaszuführungsleitung 6 an ihrem oberen Ende aufweist. Nach Figur 1 weist der Formstempel 4 in seinem Inneren in der Nähe des vorderen Endes eine Heizpatrone 8 auf. Nach Figur 2 ist der Formstempel an seinem Außenumfang mit Wärmeübertragungsrippen 9 versehen. Durch die Anordnung der Heizpatrone 8 am vorderen Ende des Formstempels 4 wird die Heizenergie an der Stelle erzeugt, wo sie tatsächlich auch beim Verformungsvorgang benötigt wird und außerdem kann auf diese Weise der Formstempel mit einer verhältnismäßig kleinen Masse ausgerüstet sein. Bei der Ausführungsform nach Figur 1 ist der Abstand zwischen dem Formstempel 4 und der Strömungsbegrenzung 5 sehr eng, so dass das eingeführte Gas durch den erhitzten Formstempel schnell auf die notwendige Temperatur gebracht werden kann. Bei der Ausführungsform nach Figur 2 sind am Außenumfang des Formstempels in der Nähe des unteren Endes Wärmeübertragungsrippen vorgesehenen, die zur Erwärmung des durch die Zuführungsleitung 6 eingeführten Gases bzw. der eingeführten Luft dienen, die nach Art einer Zyklonströmung nach unten strömt und am vorderen Ende 7 austritt. Ein düsenartig verjüngtes Ende 7 dient zur Beschleunigung der Gasströmung und zur Verringerung des Austrittsquerschnittes der Strömungsbegrenzung 5, die wegen der Wärmeübertragungsrippen ausgeweitet werden musste. Diese Ausführungsform kommt insbesondere dann zur Anwendung, wenn bei größeren, verformbaren Verbindungskörpern eine erhöhte Gasmenge notwendig ist. Dabei wird der verformbare Verbindungskörper 3 durch die erhitzte Luft gleichmäßig erwärmt, bis ein Zustand erreicht ist, in welchem dieser Verbindungskörper plastifiziert ist. Dann wird ausgehend von Figur 1, bzw. Figur 2 wie in Figur 3 ersichtlich, der Formstempel 4 zusammen mit der Strömungsbegrenzung 5 abgesenkt und der Formvorgang durchgeführt, d.h. es wird ein Nietkopf 3a am oberen Ende des Verbindungskörpers 3 angeformt. Wenn dieser Nietkopf geformt ist, wird die Heizleistung der Heizpatrone 8 abgeschaltet und die Gaszuführung durch die Gaszuführungsleitung 6 erhöht. Hierbei handelt es sich üblicherweise um Umgebungsluft, die dann den Formstempel und den geformten Nietkopf 3a abkühlt. Wegen der geringen Masse des Formstempels erfolgt eine verhältnismäßig rasche Abkühlung des Formstempels und des mit dem Formstempel in Verbindung stehenden, neu geformten Nietkopfes 3a.

## Patentansprüche

1. Verfahren zum Verbinden von Gegenständen mittels mindestens eines plastisch verformbaren Verbindungskörpers (3), bei dem der Verbindungskörper (3) zunächst mittels einer am oberen Ende des Verbindungskörpers (3) nach unten ausgerichteten erhitzten Gasströmung erhitzt und anschließend mittels eines Formstempels (4) bleibend verformt wird, **dadurch gekennzeichnet, dass** die Gasströmung außen durch eine Strömungsbegrenzung (5) begrenzt wird und dass der verformte Verbindungskörper (3) unmittelbar nach dem Verformen durch eine kalte Gasströmung gekühlt wird, die durch die gleiche Strömungsbegrenzung (5) wie die erhitzte Gasströmung begrenzt wird.

2. Verfahren nach Anspruch 1, **dadurch gekennzeichnet, dass** die Gasströmung durch einen im Bereich des Verbindungskörpers (3) vorgesehenen Heizkörper (8) erhitzt wird.

3. Verfahren nach Anspruch 1 oder 2, **dadurch gekennzeichnet, dass** der Formstempel (4) für die Verformung beheizt wird und die Gasströmung durch den Formstempel (4) erhitzt wird.

4. Verfahren nach einem der Ansprüche 1 bis 3, **dadurch gekennzeichnet, dass** die Strömungsbegrenzung (5) als Wand den Formstempel zumindest im Bereich seiner Heizung (8) mit geringem Abstand umgibt und die Gasströmung von oben in Richtung auf das freie Ende des Formstempels (4) in dem Spalt zwischen Formstempel (4) und Wand (5) eingeführt wird.

5. Verfahren nach einem der Ansprüche 1 bis 4, **dadurch gekennzeichnet, dass** die Gasströmung nach der Beendigung der Heizwirkung mengenmäßig erhöht wird.

6. Verfahren nach einem der Ansprüche 1 bis 5, **dadurch gekennzeichnet, dass** die Gasströmung in Richtung des freien Endes des Formstempels (4) beschleunigt wird.

7. Vorrichtung, insbesondere zur Durchführung des Verfahrens nach einem der Ansprüche 1 bis 6 mit einem verschiebbaren Formstempel (4) zur Verformung eines verformbaren Verbindungskörpers (3), einer Heizung (8, 10) zur Erhitzung des Formstempels (4) und einer Einrichtung zur Zuführung eines gasförmigen Mediums zum Verbindungskörper (3), **dadurch gekennzeichnet, dass** eine Strömungsbegrenzung (5) für das gasförmige Medium, die zusammen mit dem Formstempel (4) höhenverschiebbar geführt ist, zumindest das untere freie Ende des Formstempels (4) umgibt und dass das erhitzte gasförmige Medium für die Erwärmung des Verbindungskörpers (3) und das kalte gasförmige Medium für die Kühlung des verformten Verbindungskörpers (3) in den Zwischenraum zwischen dem Formstempel (4) und der Strömungsbegrenzung (5) einführbar ist.

8. Vorrichtung nach Anspruch 7, **dadurch gekennzeichnet, dass** der Formstempel (4) im Inneren mit einer elektrischen Heizung (8) ausgerüstet und mit geringem Abstand von einer Strömungsbegrenzung (5) umgeben ist, die eine Gaszuführungsleitung (6) aufweist und die Gasströmung zum verformbaren Verbindungskörper leitet.

9. Vorrichtung nach Anspruch 8, **dadurch gekennzeichnet, dass** die elektrische Heizung als Heizpatrone (8) in unmittelbarer Nähe des vorderen Endes des dünnwandigen, massearmen Formstempels (4) angeordnet ist.

10. Vorrichtung nach einem der Ansprüche 7 bis 9, **dadurch gekennzeichnet, dass** der Formstempel (4) an seiner Außenseite im Heizbereich mit Wärmeübertragungsrippen (9) versehen ist.

11. Vorrichtung nach einem der Ansprüche 7 bis 10, **dadurch gekennzeichnet, dass** die Strömungsbegrenzung (5) an ihrem unteren offenen Ende düsenartig (7) verjüngt ausgebildet ist.

## Claims

1. Method of connecting articles by means of at least one plastically deformable connecting body (3), in which the connecting body (3) is first of all heated by means of a heated gas flow, directed downwards at the top end of the connecting body (3), and is then permanently deformed by means of a forming punch (4), **characterized in that** the gas flow is limited on the outside by a flow limit (5), and **in that** the deformed connecting body (3) is cooled by a cold gas flow immediately after the de formation, this cold gas flow being limited like the heated gas flow by the same flow limit (5).

2. Method according to Claim 1, **characterized in that** the gas flow is heated by a heating element (8) provided in the region of the connecting body (3).

3. Method according to Claim 1 or 2, **characterized in that** the forming punch (4) is heated for the deformation and the gas flow is heated by the forming punch (4).

4. Method according to one of Claims 1 to 3, **characterized in that** the flow limit (5), as a wal 1, surrounds the forming punch, at least in the region of its heater (8), at a slight distance apart, and the gas flow is introduced from above in the direction of the free end of the forming punch (4) in the gap between forming punch (4) and wall (5).

5. Method according to one of Claims 1 to 4, **characterized in that** the gas flow is increased in quantity after completion of the heating effect.

6. Method according to one of Claims 1 to 5, **characterized in that** the gas flow is accelerated in the direction of the free end of the forming punch (4).

7. Apparatus, in particular for carrying out the method according to one of Claims 1 to 6, having a displaceable forming punch (4) for deforming a deformable connecting body (3), a heater (8, 10) for heating the forming punch (4), and a device for feeding a gaseous medium to the connecting body (3), **characterized in that** a flow limit (5) for the gaseous medium, this flow limit (5) being guided in a vertically adjustable manner together with the forming punch (4), s urrounds at least the bottom free end of the forming punch (4), and **in that** the heated gaseous medium for heating the connecting body (3) and the cold gaseous medium for cooling the deformed connecting body (3) can be introduced into the intermediate space between the forming punch (4) and the flow limit (5).

8. Apparatus according to Claim 7, **characterized in that** the forming punch (4) is provided in the interior with an electric heater (8) and is surrounded at a slight distance apart by a flow limit (5) which has a gas feed line (6) and directs the gas flow to the deformable connecting body.

9. Apparatus according to Claim 8, **characterized in that** the electric heater is arranged as a heating cartridge (8) in the immediate vicinity of the front end of the thin-walled, low-mass forming punch (4).

10. Apparatus according to one of Claims 7 to 9, **characterized in that** the forming punch (4) is provided with heat -transfer ribs (9) on its outside in the heating region.

11. Apparatus according to one of Claims 7 to 10, **characterized in that** the flow limit (5) is designed to be tapered in a nozzle -like manner (7) at its bottom open end.

## Revendications

1. Procédé pour assembler des objets au moyen d'au moins un corps d'assemblage plastiquement déformable (3), dans lequel le corps d'assemblage (3) est d'abord chauffé au moyen d'un courant de gaz chauffé à l'extrémité supérieure du corps d'assemblage (3), orienté vers le bas, puis est déformé de manière permanente au moyen d'une matrice de moulage (4), **caractérisé en ce que** le courant de gaz est limité à l'extérieur par une limitation de courant (5) et **en ce que** le corps d'assemblage déformé (3) est refroidi directement après sa déformation par un courant de gaz froid, qui est limité par la même limitation de courant (5) que le courant de gaz chauffé.

2. Procédé selon la revendication 1, **caractérisé en ce que** le courant de gaz est chauffé par un corps de chauffe (8) prévu dans la région du corps d'assemblage (3).

3. Procédé selon la revendication 1 ou 2, **caractérisé en ce que** la matrice de moulage (4) est chauffée pour la déformation et le courant de gaz est chauffé par la matrice de moulage (4).

4. Procédé selon l'une quelconque des revendications 1 à 3, **caractérisé en ce que** la limitation de courant (5) entoure sous forme de paroi, à faible distance, la matrice de moulage au moins dans la région de son chauffage (8), et le courant de gaz est introduit par le haut dans la direction de l'extrémité libre de la matrice de moulage (4) dans l'espace entre la matrice de moulage (4) et la paroi (5).

5. Procédé selon l'une quelconque des revendications 1 à 4, **caractérisé en ce que** le courant de gaz est augmenté en termes de quantité après l'achèvement de l'action de chauffage.

6. Procédé selon l'une quelconque des revendications 1 à 5, **caractérisé en ce que** le courant de gaz est accéléré dans la direction de l'extrémité libre de la matrice de moulage (4).

7. Dispositif, notamment pour la mise en oeuvre du procédé selon l'une quelconque des revendications 1 à 6, comprenant une matrice de moulage (4) déplaçable pour la déformation d'un corps d'assemblage déformable (3), un chauffage (8, 10) pour le chauffage de la matrice de moulage ( 4) et un dispositif pour l'alimentation en milieu gazeux au corps d'assemblage (3), **caractérisé en ce qu'**une limitation de courant (5) pour le milieu gazeux, qui est guidée conjointement avec la matrice de moulage (4) de m anière déplaçable en hauteur, entoure au moins l'extrémité libre inférieure de la matrice de moulage (4) et **en ce que** le milieu gazeux chauffé peut être introduit pour chauffer le corps d'assemblage (3) et le milieu gazeux froid peut être introduit pour refroidir le corps d'assemblage déformé (3) dans l'espace intermédiaire entre la matrice de moulage (4) et la limitation de courant (5).

8. Dispositif selon la revendication 7, **caractérisé en ce que** la matrice de moulage (4) est équipée à l'intérieur d'un chauffage électrique (8) et est entourée avec une faible distance, par une limitation de courant (5), qui présente une conduite d'alimentation en gaz (6) et qui amène le courant de gaz au corps d'assemblage déformable.

9. Dispositif selon la revendication 8, **caractérisé en ce que** le chauffage électrique est disposé sous forme de cartouche de chauffage (8), à proximité immédiate de l'extrémité avant de la matrice de moulage (4) à parois minces, de faible masse.

10. Dispositif selon l'une quelconque des revendications 7 à 9, **caractérisé en ce que** la matrice de moulage (4) est pourvue sur son côté extérieur dans la région de chauffage de nervures de transfert thermique (9).

11. Dispositif selon l'une quelconque des revendications 7 à 10, **caractérisé en ce que** la limitation de courant (5) est réalisée avec un rétrécissement de type buse (7) au niveau de son extrémité ouverte inférieure.
